# EUROPEAN PATENT SPECIFICATION

(11) **EP 1 503 648 B1**
(45) Date of publication and mention of the grant of the patent: **01.08.2007**
(21) Application number: 03724703.8
(22) Date of filing: 12.05.2003
(51) Int. Cl.: A47J 9/00

(54) **UTENSIL HAVING INTEGRATED LIP**
KOCHGESCHIRR MIT INTEGRIERTER LIPPE
USTENSILE COMPRENANT UNE LEVRE INTEGREE

(30) Priority: 10.05.2002 US 379703 P; 10.05.2002 US 379698 P; 10.05.2002 US 379636 P; 10.05.2002 US 379634 P
(43) Date of publication of application: 09.02.2005
(73) Proprietor: Cornfield, Randall, Montreal, Quebec H4W 3G4 (CA)
(72) Inventor: Cornfield, Randall, Montreal, Quebec H4W 3G4 (CA)
(74) Representative: Miller, James Lionel Woolverton
(86) International application number: PCT/CA2003/000663
(87) International publication number: WO 2003/094678

(56) References cited:
- DE-C- 747 054
- FR-A- 764 140
- FR-A- 776 171
- GB-A- 321 868
- US-A- 2 900 656
- US-A- 3 822 020

## Description

The present invention relates to utensils suitable for use in the culinary arts.

### BACKGROUND OF THE INVENTION

The field of utensils which are suitable for use in the culinary field is replete with many different proposals for different types of utensils. Thus, there are provided spoons and spatulas of different sizes and configurations depending upon the final use of the device. However, to-date, none of the devices known to applicant are able to satisfactorily be used in bowls or pans, or the like which typically have an arcuate configuration and an arcuate or otherwise shaped merging section between the side wall and base thereof.

A number of different types of utensils are known in the art. Thus, reference may be had to U. S. Patent 3,092, 411 to Hardy which discloses a conventional type of spatula having a straight front edge. Such spatulas are widely available.

A modified version of a spatula is shown in U. S. Patent 5,794, 996 wherein an angled front edge is utilized. The spatula has rounded corners to assist in the manipulation of food.

Spatulas having pointed portions are also known in for example, U. S. Patent 901,671 which discloses a spatula having a leading edge or point at the center thereof

Spoons or like articles having an arcuate corner configuration are known and thus, reference may be had to U. S. Patent Design 9,204, 296 which discloses such a article.

Another utensil is known from US2900656, wherein a cleaning, scraping and mixing element is disclosed having a leading edge area having an indented portion for facilitating access to containers.

However, despite the number of utensils which are known, many such devices are not suitable for fully reaching into the corners of a pan or pot to manipulate the food ingredients.

Thus, when utilizing the utensil with a bowl or a pan or the like which have such a merging accurate section, it is impossible to fully scrape this portion of the bowl or pan. As will be appreciated, this is often desirable when one is mixing, stirring or otherwise manipulating the contents of the bowl or pan.

US-A-2900656 discloses a mixing implement having the features of the pre-characterising portion of Claim 1. The front edge of the utensil also has a concave, rearwardly - extending portion.

It is an object of the present invention to provide an improved utensil suitable for use in the culinary arts and which utensil has means for removing the material from the corner of a pan, pot, bowl, or the like.

The present invention provides a utensil as set out in Claim 1. Various optional features are set out in the dependent claims.

As used in the present application, the term utensil includes within its scope any implement which may be used in the culinary arts for the purpose of mixing, dispensing, lifting, serving, separating, or a like operation. Some of the commonly known implements include, for example, those commonly described as spatulas, different types of spoons, ladles, etc. All of these implements are generally characterized by having a handle portion and a food contacting portion. The handle portion usually comprises as elongated member which may have many different configurations and which is either permanently or temporarily attached to the food contacting portion. The food contacting portion, depending upon the ultimate purpose of the utensil, may have a relatively flat upper and bottom surface as is the case in most spatulas. Alternatively, in the case of ladles and spoons and the like, the upper surface is generally of a concave configuration.

In all of the above instances, the utensil generally has a pair of side edges and a front edge. In some instances, the side edges and the front edge are substantially linear in confirmation while in other embodiments, such as many spoons and ladles, both the front and side edges may have a substantially arcuate configuration with the front edge merging substantially arcuately with the side edges.

Preferred embodiments are designed to be used with all of the aforementioned configurations. In general, as stated above, there are provided a pair of opposed side edges and the front edge, with first and second corners being formed where the front edge meets the first and second side edges.

The forwardly protruding portion, referred to herein also as a lip or a tongue, can extend forwardly from the front edge substantially adjacent the first corner, and can have an outline which comprises a first segment which is substantially a continuation of the first side edge, and a second segment which comprises a front edge, and a third side segment which extends from the front edge segment inwardly to meet the front edge of the food contacting member. The lip portion extends forwardly from the front edge a distance greater than any other protrusion on the front edge.

### BRIEF DESCRIPTION OF THE DRAWINGS

Having thus generally described the invention, reference will be made to the accompanying drawings illustrating embodiments thereof, in which:
Figure 1 is a perspective view of one embodiment of a utensil according to the present invention;
Figure 2 is a perspective view of a second embodiment of a utensil according to the present invention;
Figure 3 is a partial detailed view of the food contacting portion of the utensil shown in Figure 1;
Figure 4 is a partial detailed side view of the food contacting portion of the utensil shown in Figure 1;
Figure 5 is a detailed view of the lip portion therefore; and
Figure 6 is a top plan view of a spatula according to one embodiment of the present invention;
Figure 7a is a perspective view as seen from the left had side of Figure 6;
Figure 7b is a perspective view illustrating an alternative embodiment of the invention;
Figure 7c is a perspective view illustrating an alternative embodiment of the invention;
Figure 7d is a perspective view illustrating an alternative embodiment of the invention;
Figure 8a is a top plan view of a still further version of a spatula according to the present invention;
Figure 8b is a top plan view of a still further version of a spatula according to the present invention;
Figure 9a is a bottom plan view of a potato masher according to the present invention;
Figure 9b is a perspective view of a potato masher according to the present invention; and
Figure 9c is a perspective view of a potato masher according to the present invention.

### DESCRIPTION OF THE PREFERRED EMBODIMENT

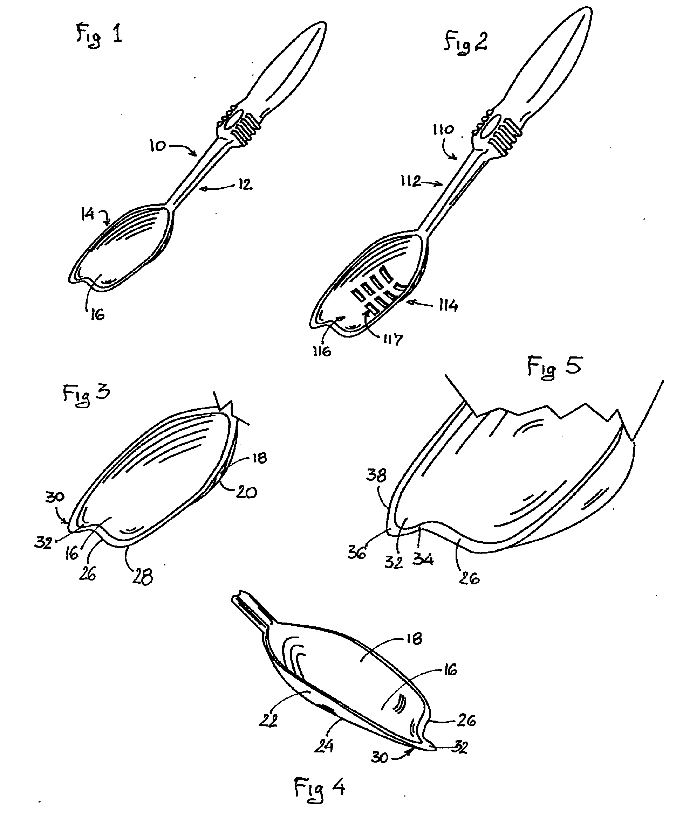

Referring to the drawings in greater detail, and by reference characters thereto, there is illustrated in Figure 1 a utensil which is generally designated by reference numeral 10.

Utensil 10 is comprised of a handle 12 and a food contacting portion generally designated by reference numeral 14. Food contacting portion 14 includes a base wall 16 which has a first side edge 20. A first side wall 18 extends upwardly from side edge 20. Similarly, there is provided a second opposed side edge 24 having an upwardly extending second side wall 22.

Extending between side edges 20 and 24 is a front edge generally designated by reference numeral 26.

The merger of side edge 20 and front edge 26 provides a first corner 28, while a second corner 30 is provided where second side edge 24 merges with front edge 26.

According to the present invention, there is provided a lip which is generally designated by reference numeral 32. As may be best seen in Figure 5, lip 32 includes a first segment 38 which is substantially a continuation of side edge 24. This in turn merges with a second segment which is a front edge segment designated by reference numeral 36, and a third side segment 34 which extends from the front edge segment 36 inwardly to meet the front edge 26 of the instrument.

Lip 32 is characterized as extending beyond a plane which is tangential to the front edge of the food contacting portion 14 at a point which is intermediate side edges 20 and 24.

The embodiment of Figure 2 is substantially the same as that of Figure 1 with minor modifications thereto. Thus, there is provided a utensil 110 having a handle 112 and a food contacting portion 114. A bottom wall 116 is provided with a plurality of apertures 117 therein.

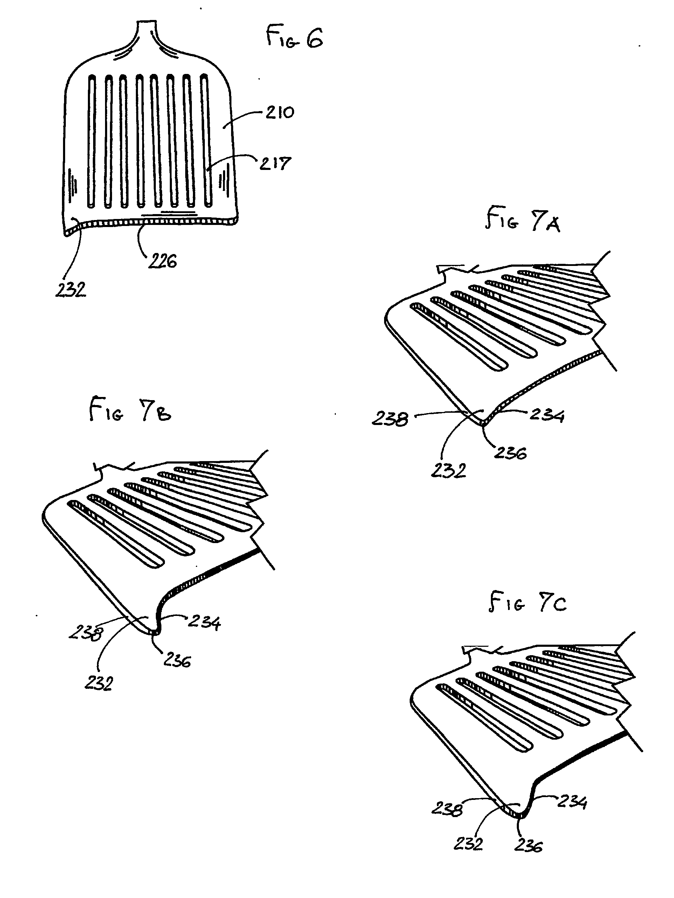

As shown in Figure 6, there may be provided a spatula generally designated by reference numeral 210. Reference numerals similar to those previously utilized are employed in this embodiment, but are numbered in the 200's. Thus, as may be seen, there is provided a lip 232 which extends forwardly of the front edge of the spatula at a first corner thereof. As may be seen, a plurality of elongated slots or apertures 217 are provided therein.

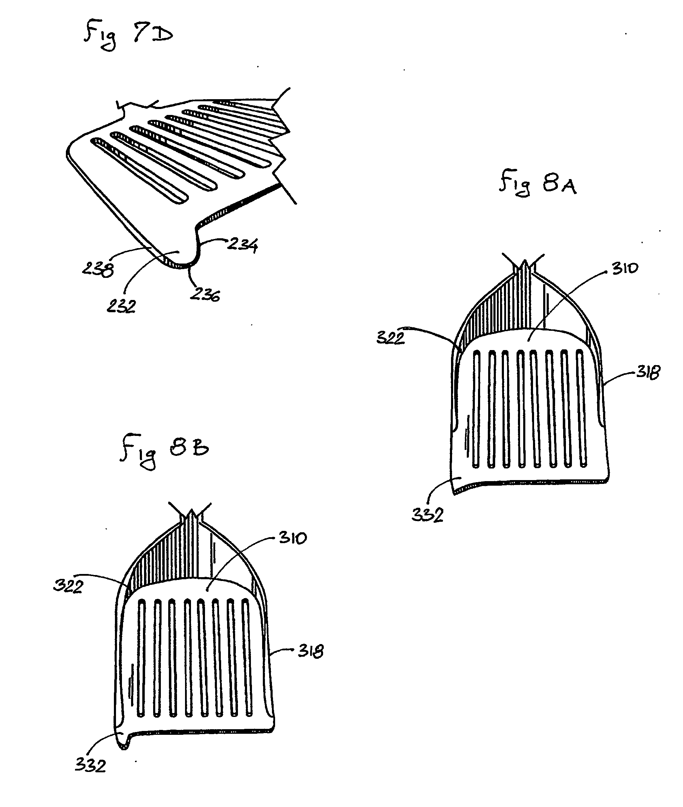

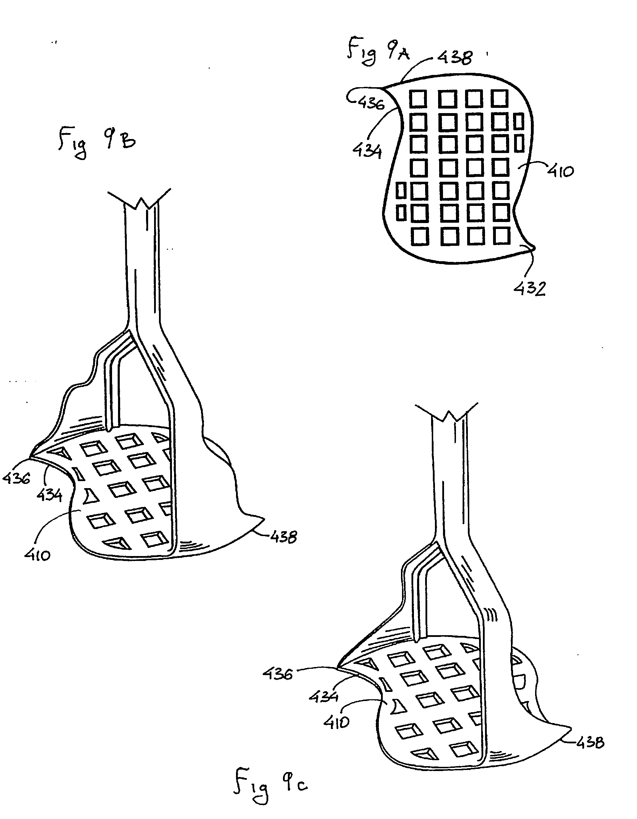

In the embodiment of Figure 8, utensil 310 is similar to that shown in Figures 6 and 7. However, there are provided a pair of upwardly extending side walls 322 and 318 extending upwardly from the side edges. It is to be noted that side walls 322 and 318 terminate short of the corners.

In Figure 9, there is shown a utensil 410 which is in the form of a potato masher. In this embodiment, there is again provided a utensil 410 with a food contacting portion 414 which has a lip 432 and which has an outline or configuration which comprises a first segment 438 which is a continuation of the side wall 440, a front segment 436, and a second side segment 434 which extends inwardly. It should be understood that the front segment 436 may have any suitable configuration without departing from the scope of the present invention. For example, the front segment 436 may have a substantially curved or arcuate configuration, a substantially rectilinear configuration or, as illustrated in Figure 9 a substantially pointed configuration defined by segments 438 and 434 meeting at a relatively sharp angle.

The lip may protrude substantially outwardly or at an angle from a substantially horizontal reference plane in utensils or implements without departing from the scope of the present invention. For example, in the case of a spatula, the reference plane could extend in a coplanar relationship with the food contacting plate. In the case of a spoon the reference plane could extend in a coplanar relationship with the peripheral edge of the spoon.

In each of the above cases, the lip portion is designed to facilitate the removal of food contents from corners of pans and the like. This is extremely useful when mixing or otherwise manipulating the food while cooking. In the case of the potato masher 410, lip 432 ensures that the masher reaches right into the corner of the container.

It will be understood that the above described embodiment is for purposes of illustration only and that changes or modifications may be made thereto without departing from the scope of the invention as defined by the claims as interpreted under patent law.

## Claims

1. A utensil (10; 110; 210; 310; 410) having a food contacting member (14; 114), wherein said food contacting member (14; 114) has a first side edge (24), second side edge (20) and a front edge (26; 226) extending between said side edges (24; 20);
the front edge (26; 226) having a first portion located on a substantially linear or substantially arcuate line;
**characterised by** the front edge having a forwardly protruding portion (32; 232; 332; 432) which forms a minor part thereof and which is located adjacent one of the side edges and protrudes forward in front of the substantially linear or substantially arcuate line on which the first portion of the front edge is located.

2. A utensil as claimed in Claim 1, including a first corner (30) formed where said first side (24) edge meets said front edge (26; 226) and a second corner (28) being formed where said second side edge meets said front edge (26; 226).

3. A utensil according to Claim 2, wherein said front edge (26; 226) has a generally straight outline between said forwardly protruding portion and said second corner (28).

4. A utensil according to Claim 1 or 2 or Claim 3, wherein said food contacting member comprises a spatula (210; 310) having a substantially flat top surface and a substantially flat bottom surface.

5. A utensil according to Claim 4, when dependent upon Claim 2 further including a first side wall (322) extending substantially upwardly along a part of said first side edge and a second side wall (318) extending substantially upwardly along a part of said second side edge, said first and second side walls (318, 322) terminating before said first and second corners.

6. A utensil according to Claim 4 or 5, further including apertures (217) extending between said top and bottom surfaces.

7. A utensil according to Claim 1 or Claim 2 or Claim 3, wherein said food contacting member (14; 114) is in the form of a spoon having a substantially concave upper surface and a substantially convex bottom surface, or wherein said food contacting portion is in the form of a potato masher.

8. A utensil according to any one of Claims 1 to 7, wherein said forwardly protruding portion (32; 232; 332; 432;) comprises a non-apertured solid portion.

9. A utensil as claimed in Claim 2 or any preceding claim when dependent upon Claim 2, wherein said forwardly protruding portion is located adjacent said first corner (30) and has opposed forwardly directed first and second side edge segments (34; 38).

10. A utensil according to Claim 9, wherein the first side segment (38) of the forwardly protruding portion (32; 232; 332; 432) is an extension of said first side wall and the second side segment (34) comprises an arcuate wall portion merging with said front edge (26; 226).

11. A utensil according to Claim 6, wherein said apertures (217) are elongated slots.

12. A utensil according to Claim 9 or Claim 10, wherein the food contacting member (14; 114) extends substantially in a reference geometrical plane (P), the forwardly protruding portion (32; 232; 432) comprises a front edge segment (36; 236; 436) extending between said first and second side edge segments (34; 38; 234; 238; 434, 438); at least one of said first or second side edge segments (34; 38; 234; 238; 434, 438) extending at an angle relative to said food contacting member front edge (26; 226).

13. A utensil according to Claim 12, wherein both of said first and second side edge segments (34; 38; 234, 238; 234, 438) extend at an angle relative to said food contacting member front edge (26; 226).

14. A utensil according to Claim 12 or 13, wherein said first side edge segment (38; 238; 438) extends substantially co-linearly from said food contacting member first side edge (24).

15. A utensil according to any one of the preceding claims, wherein the forwardly protruding portion (32; 232; 332; 432) extends forwardly a distance sufficient to enable said portion (32; 232; 332; 432) to fit into a corner between side and bottom walls of a food container.

16. Use of the utensil according to Claim 1 to manipulate food in a container having a side wall merging at a merging portion with a bottom wall such that the forwardly protruding portion (32; 232; 332; 432) fits within said merging portion of said container to provide access thereto.

## Patentansprüche

1. Utensil (10; 110; 210; 310; 410) mit einem Nahrungsmittel-Kontaktelement (14; 114), wobei das Nahrungsmittel-Kontaktelement (14; 114) einen ersten Seitenrand (24), einen zweiten Seitenrand (20) und einen Vorderrand (26; 226) aufweist, welcher zwischen den beiden Seitenrändern (20; 24) verläuft;
welcher Vorderrand (26; 226) einen ersten Teil aufweist, der auf einer im Wesentlichen geraden oder im Wesentlichen bogenförmigen Linie angeordnet ist:
**dadurch gekennzeichnet, dass** der Vorderrand einen nach vorne vorstehenden Teil (32; 232; 332; 432) aufweist, welcher einen geringen Teil davon bildet und benachbart einem der Seitenränder angeordnet ist und vor die im Wesentlichen gerade oder im Wesentlichen bogenförmige Linie nach vorne hinausragt, auf welcher der erste Teil des Vorderrands angeordnet ist.

2. Utensil nach Anspruch 1, enthaltend eine erste Ecke (30), welche dort gebildet ist, wo der erste Seitenrand (24) auf den Vorderrand (26; 226) trifft, und eine zweite Ecke (28), welche dort gebildet ist, wo der zweite Seitenrand auf den Vorderrand (26; 226) trifft.

3. Utensil nach Anspruch 2, wobei der Vorderrand (26; 226) eine allgemein gerade Außenlinie zwischen dem nach vorne vorstehenden Teil und der zweiten Ecke (28) aufweist.

4. Utensil nach Anspruch 1 oder 2 oder 3, wobei das Nahrungsmittel-Kontaktelement einen Pfannenwender (210; 310) umfasst, welcher eine im Wesentlichen flache Oberseite und eine im Wesentlichen flache Unterseite hat.

5. Utensil nach Anspruch 4, wenn von Anspruch 2 abhängig, welches weiters eine erste Seitenwand (322), welche im Wesentlichen aufwärts entlang eines Teils des ersten Seitenrandes verläuft, und eine zweite Seitenwand (318) aufweist, welche im Wesentlichen aufwärts entlang eines Teils des zweiten Seitenrandes verläuft, wobei die erste und die zweite Seitenwand (318, 322) vor der ersten bzw. zweiten Ecke enden.

6. Utensil nach Anspruch 4 oder 5, weiters mit Öffnungen (217), welche sich zwischen der Oberseite und der Unterseite erstrecken.

7. Utensil nach Anspruch 1 oder 2 oder 3, wobei das Nahrungsmittel-Kontaktelement (14; 114) die Form eines Löffels mit einer im Wesentlichen konkaven Oberseite und einer im Wesentlichen konvexen Unterseite hat, oder wobei das Nahrungsmittel-Kontaktteil die Form eines Kartoffelstampfers hat.

8. Utensil nach einem der Ansprüche 1 bis 7, wobei der nach vorne vorstehende Teil (32; 223; 332; 432) einen vollen Teil ohne Öffnungen umfasst.

9. Utensil nach Anspruch 2 oder einem der vorhergehenden Ansprüche, wenn von Anspruch 2 abhängig, wobei der nach vorne vorstehende Teil benachbart der ersten Ecke (30) angeordnet ist und gegenüberliegende, nach vorne gerichtete erste und zweite Seitenrandsegmente (34; 38) aufweist.

10. Utensil nach Anspruch 9, wobei das erste Seitensegment (38) des nach vorne vorstehenden Teils (32; 232; 323; 432) eine Verlängerung der erste Seitenwand ist und das zweite Seitensegment (34) einen bogenförmigen Wandteil umfasst, welcher mit dem Vorderrand (26; 226) zusammenläuft.

11. Utensil nach Anspruch 6, wobei die Öffnungen (217) längliche Schlitze sind.

12. Utensil nach Anspruch 9 oder 10, wobei das Nahrungsmittel-Kontaktelement (14; 114) im Wesentlichen in einer geometrischen Bezugsebene (P) verläuft, und der nach vorne vorstehende Teil (32; 232; 432) ein vorderes Randsegment (36; 236; 436) umfasst, welches zwischen dem ersten und dem zweiten Seitenrandsegment (34; 38; 234, 238; 434; 438) verläuft; wobei zumindest eines der ersten und zweiten Seitenrandsegmente (34; 38; 234; 238; 434; 438) in einem Winkel zum vorderen Rand (26, 226) des Nahrungsmittel-Kontaktelementes verläuft.

13. Utensil nach Anspruch 12, wobei beide Seitenrandsegmente (34, 38; 234, 238; 434, 438) in einem Winkel zum Vorderrand (26; 226) des Nahrungsmittel-Kontaktelements verlaufen.

14. Utensil nach Anspruch 12 oder 13, wobei sich das erste Seitenrandsegment (38; 238; 438) im Wesentlichen co-linear vom vorderen Seitenrand (24) des Nahrungsmittel-Kontaktelements weg erstreckt.

15. Utensil nach einem der vorhergehenden Ansprüche, wobei sich der nach vorne vorstehende Teil (32; 232; 332; 432) nach vorne über eine Distanz erstreckt, die ausreichend ist, damit der Teil (32; 232; 323; 432) in eine Ecke zwischen Seiten- und Bodenwänden eines Nahrungsmittelbehälters passt.

16. Verwendung des Utensils nach Anspruch 1 zum Manipulieren eines Nahrungsmittels in einem Behälter, welcher eine Seitenwand aufweist, welche in einem Übergangs-Teil in eine Bodenwand übergeht, so dass der nach vorne vorstehende Teil (32; 232; 323; 432) in diesen Übergangs-Teil des Behälters passt, um einen Zugang zu diesem zu ermöglichen.

## Revendications

1. Ustensile (10; 110; 210; 310; 410) ayant un élément en contact avec la nourriture (14; 114), dans lequel ledit élément en contact avec la nourriture (14; 114) a un premier bord latéral (24), un deuxième bord latéral (20) et un bord frontal (26; 126) s'étendant entre lesdits bords latéraux (24; 20) ;
le bord frontal (26; 226) ayant une première partie située sur une ligne essentiellement linéaire ou essentiellement arquée;
**caractérisé en ce que** le bord frontal a une partie en saillie vers l'avant (32; 232; 332; 432) qui en forme une partie mineure et qui est située adjacente à l'une des bords latéraux et dépasse vers l'avant face à la ligne essentiellement linéaire ou essentiellement arquée sur laquelle la première partie du bord frontal se situe.

2. Ustensile selon la revendication 1, incluant un premier coin (30) formé là où ledit premier bord latéral (24) rencontre ledit bord frontal (26; 226) et un deuxième coin (28) formé là où ledit deuxième bord latéral rencontre ledit bord frontal (26; 226).

3. Ustensile selon la revendication 2, dans lequel ledit bord frontal (26; 226) a un profil généralement droit entre ladite partie en saillie vers l'avant et ledit deuxième coin (28).

4. Ustensile selon la revendication 1 ou 2 ou la revendication 3, dans lequel ledit élément en contact avec la nourriture comprend une spatule (210; 310) ayant une surface supérieure essentiellement plate et une surface inférieure essentiellement plate.

5. Ustensile selon la revendication 4 lorsqu'elle dépend de la revendication 2, incluant de plus une première paroi latérale (322) s'étendant essentiellement vers le haut le long d'une partie dudit premier bord latéral et une deuxième paroi latérale (318) s'étendant essentiellement vers le haut le long d'une partie dudit deuxième bord latéral, lesdites première et deuxième parois latérales (318, 322) se terminant avant lesdits premier et deuxième coins.

6. Ustensile selon la revendication 4 ou 5, incluant en plus des ouvertures (217) s'étendant entre lesdites surfaces supérieure et inférieure.

7. Ustensile selon la revendication 1, 2 ou 3, dans lequel ledit élément en contact avec la nourriture (14; 114) est en forme de cuiller ayant une surface supérieure essentiellement concave et une surface inférieure essentiellement convexe, ou dans lequel ladite partie en contact avec la nourriture est en forme de presse-purée.

8. Ustensile selon l'une quelconque des revendications 1 à 7, dans lequel ladite partie en saillie vers l'avant (32; 232; 332; 432) comprend une partie massive sans ouverture.

9. Ustensile selon la revendication 2 ou selon l'une quelconque des revendications précédentes lorsqu'elle dépend de la revendication 2, dans lequel ladite partie en saillie vers l'avant est située adjacente audit premier coin (30) et a des premier et deuxième segments de bord latéral (34; 38) opposés, dirigés vers l'avant.

10. Ustensile selon la revendication 9, dans lequel le premier segment latéral (38) de la partie en saillie vers l'avant (32; 232; 332; 432) est une extension de ladite première paroi latérale et le deuxième segment latéral (34) comprend une partie de paroi arquée rejoignant ledit bord frontal (26; 226).

11. Ustensile selon la revendication 6, dans lequel lesdites ouvertures (217) sont des fentes allongées.

12. Ustensile selon la revendication 9 ou 10, dans lequel l'élément en contact avec la nourriture (14; 114) s'étend généralement dans un plan de référence géométrique (P), la partie en saillie vers l'avant (32; 232; 432) comprend un segment de bord frontal (36; 236; 436) s'étendant entre lesdits premier et deuxième segments de bord latéral (34; 38; 234; 238; 434; 438) ; au moins l'un desdits premier et deuxième segments de bord latéral (34; 38; 234; 238; 434; 438) s'étendant selon un angle par rapport audit bord frontal (26; 226) dudit élément en contact avec la nourriture.

13. Ustensile selon la revendication 12, dans lequel les deux desdits premier et deuxième segments de bord latéral (34; 38; 234; 238; 434; 438) s'étendent selon un angle par rapport audit bord frontal (26; 226) de l'élément en contact avec la nourriture.

14. Ustensile selon la revendication 12 ou 13, dans lequel ledit premier segment de bord latéral (38; 238; 438) s'étend essentiellement co-linéairement avec ledit premier bord latéral de l'élément en contact avec la nourriture (24).

15. Ustensile selon l'une quelconque des revendications précédentes, dans lequel la partie en saillie vers l'avant (32; 232; 332; 432) se prolonge vers l'avant sur une distance suffisante pour permettre à ladite partie (32; 232; 332; 432) de s'introduire dans un coin entre des parois latérale et de fond d'un contenant de nourriture.

16. Utilisation de l'ustensile selon la revendication 1 pour manipuler de la nourriture dans un contenant ayant une paroi latérale rejoignant dans une partie de jonction une paroi de fond de sorte que la partie en saillie vers l'avant (32; 232; 332; 432) s'introduise dans ladite partie de jonction dudit contenant pour permettre d'y accéder.
